# EUROPÄISCHE PATENTSCHRIFT

(11) **EP 3 725 652 B1**
(45) Veröffentlichungstag und Bekanntmachung des Hinweises auf die Patenterteilung: **27.07.2022**
(21) Anmeldenummer: 19170150.7
(22) Anmeldetag: 18.04.2019
(51) Int. Cl.: B62D 63/02, B62D 65/00, B62D 21/15, B62D 29/04, B62D 67/00, B62D 27/06, B62D 29/00, B62D 25/08

(54) **VERFAHREN ZUR REPARATUR EINER FAHRZEUGKAROSSERIE**
METHOD FOR REPAIRING A VEHICLE BODY
PROCÉDÉ DE RÉPARATION D'UNE CARROSSERIE DE VÉHICULE

(43) Veröffentlichungstag der Anmeldung: 21.10.2020
(73) Patentinhaber: EDAG Engineering GmbH, 65205 Wiesbaden (DE)
(72) Erfinder: RYBAK, Hubert, 81927 München (DE); CABA, Stefan, 36124 Eichenzell (DE); SCHLEICHER, Jan, 36163 Poppenhausen (DE); HILLEBRECHT, Martin, 36100 Petersberg (DE)
(74) Vertreter: Isarpatent

(56) Entgegenhaltungen:
- EP-A1- 0 142 581
- EP-A1- 0 618 106
- WO-A1-2005/095192
- DE-A1-102014 018 053
- GB-A- 2 552 852
- US-A1- 2013 252 059

## Beschreibung

Die vorliegende Erfindung betrifft ein Verfahren zur Reparatur einer derartigen Fahrzeugkarosserie.

### TECHNISCHER HINTERGRUND

Fahrzeugkarosseriekonzepte werden oftmals modular aufgebaut, um Kommunalität zwischen verschiedenen Modellreihen zu erreichen. Auf diese Weise können beispielsweise Produktionswerkzeuge für verschiedene Modellreihen verwendet werden. Die einzelnen Module einer Fahrzeugkarosserie werden bei der Montage in der Regel dauerhaft miteinander verbunden.

Faserverbundwerkstoffe wie Kohlefaserkunststoffverbund oder Glasfaserkunststoffverbund werden trotz ihrer hinlänglich bekannten werkstofftechnischen Vorteile bisweilen, insbesondere bedingt durch hohe Materialkosten, vergleichsweise aufwendige Herstellungsprozesse und schwierige Reparatur- und Recyclingmöglichkeiten, nur vereinzelt bei Fahrzeugkarosserien eingesetzt. Beispielsweise ist aus dem Motorsport oder von Supersportwagen das sogenannte "Monocoque" bekannt, welches eine Faserverbundkunststoffzelle bildet, die mit dem Rest einer Karosserie, insbesondere einer Vorderwagen und einer Hinterwagen, dauerhaft verklebt wird.

Die WO 2012/117204 A1 beschreibt ein spezielles modulares Fahrzeugkonzept mit Zentral-, Front-und Heckmodul in Leichtmetallbauweise, welche austauschbar sind.

WO 2005/095192 A1 beschreibt ein modulares Fahrzeug, in dem ein vorgefertigtes Modul mit Fahrerkabine beispielsweise nach einem Unfall leicht austauschbar ist.

EP 0 142 581 A1 beschreibt eine modular aufgebaute Basis-Karosserie eines Fahrzeugs. Die Karossiere umfasst eine zentrale Schale, an welcher vorne und hinten baugleiche Module verschraubbar angebracht werden können. Diese Module können aus kunststoffimprägniertem Glasfasermaterial ausgebildet sein.

EP 0 618 10 A1 beschreibt ein modular aufgebautes Fahrzeug, welches ein Frontmodul, ein auswechselbares Heckmodul und ein Antriebsmodul umfasst, welche über baugleiche Kupplungen aneinander ankoppelbar sind.

GB 2 552 852 A beschreibt eine Monocoque eines Fahrzeugs, welches aus thermoplastischen Verbundwerkstoffen hergestellt ist.

US 2013/252059 A1 beschreibt ein Gehäuse für eine Batterie, welche für eine Verwendung in einem Elektro-Fahrzeug vorgesehen ist.

DE 10 2014 018053 beschreibt einen weiteren Strukturaufbau für Fahrzeuge aus Verbundwerkstoffen.

### ZUSAMMENFASSUNG DER ERFINDUNG

Vor diesem Hintergrund liegt der vorliegenden Erfindung die Aufgabe zugrunde, eine Möglichkeit zur nachhaltigen Integration von Faserverbundstrukturen in Fahrzeugkarosserien anzugeben.

Erfindungsgemäß wird diese Aufgabe durch ein Verfahren zur Reparatur einer Fahrzeugkarosserie mit den Merkmalen des Patentanspruchs 1 gelöst.

Die der vorliegenden Erfindung zugrunde liegende Erkenntnis besteht darin, dass Faserverbundwerkstoffe aufgrund Ihrer Werkstoffeigenschaften ohne zusätzlichen Materialeinsatz eine Festigkeit bzw. Lebensdauer aufweisen, welche einen typischen Kraftfahrzeuglebenszyklus um ein vielfaches übertrifft.

Die der Erfindung zugrunde liegende Idee besteht nun darin, sich diese Werkstoffeigenschaften in Hinblick auf eine Wiederverwendbarkeit eines Karosseriestrukturmoduls für ein Kraftfahrzeug zu Nutze zu machen.

Es wird somit ein Zentralelement einer Fahrzeugkarosserie wiederverwendbar ausgelegt, indem es einerseits, zumindest maßgeblich bzw. überwiegend, mit einem Faserverbundwerkstoff gebildet wird, und indem zur lösbaren Verbindung mit Crashstrukturen ausgelegte Schnittstellen vorgesehen werden, welche eine zerstörungsfreie Demontage des Faserverbund-Zentralelements bzw. damit verbundener Crashstrukturen am Ende eines Fahrzeuglebenszyklus oder von Unfallfahrzeugen erlauben. Da sowohl das Faserverbund-Zentralelement als auch die Front- und Heckschnittstellen wiederverwendbar auf eine Lebensdauer von mehreren Fahrzeuglebenszyklen ausgelegt sind, wird der wirtschaftliche und nachhaltige Einsatz von Faserverbundwerkstoffen in Fahrzeugkarosserien für die Großserie ermöglicht.

Ein typischer Fahrzeuglebenszyklus liegt bei einer Laufleistung von ca. 200.000 km und einer Durchschnittsgeschwindigkeit von ca. 50 km/h bei etwa 4000 Betriebsstunden. Auch die Fahrzeugkarosserie wird üblicherweise auf eine derartige Laufleistung ausgelegt, einerseits im Hinblick auf in diesem Lebenszyklus auftretende Lastwechsel, andererseits aber auch in Hinblick auf die Korrosionsbeständigkeit. Aus Festigkeitsgesichtspunkten ist dies aber weit von einer sogenannten Dauerfestigkeit entfernt.

Ein Faserverbund-Zentralelement einer modularen Fahrzeugkarosserie kann nun samt der zugehörigen Schnittstellen mit einer sehr viel höheren Festigkeit, insbesondere auch dauerfest, ausgelegt und wiederverwendet werden. Besonders vorteilhaft ist eine dauerfeste Auslegung mit Faserverbund Werkstoffen deutlich einfacher darstellbar als beispielsweise in Leichtmetall- oder Stahlbauweise, da hier insbesondere die Frage der Korrosionsbeständigkeit kaum eine bzw. keine Rolle spielt. Ferner kann ein derartiges Zentralelement vorteilhaft bereits fasergerecht konstruiert werden, sodass nur wenige oder, insbesondere im Falle eines umlaufenden Rahmens, ggfs. auch keine Verbindungsstellen notwendig sind, welche hinsichtlich der Festigkeit problematisch sein könnten. Darüber hinaus weisen Faserverbundwerkstoff eine äußerst hohe Steifigkeit auf, was das Schwingungsverhalten massiv verbessert und insbesondere fahrzeugrelevante Eigenfrequenzen vermeidet.

Das Faserverbundmaterial des Faserverbund-Zentralelements enthält beispielsweise Kohlenstofffaser-Kunststoff-verbunden, Glasfaser-Kunststoff verbunden, oder dergleichen. Es kann sich bei dem Faserverbund-Zentralelements auch um ein Hybridbauteil handeln, bei welchem beispielsweise Ecken oder einzelne Knotenpunkte aus anderen Werkstoffen, beispielsweise anderen Faserverbundwerkstoffen wie beispielsweise sogenanntem Sheet Molding Compound oder Bulk Molding Compound, welche Pressmassen aus duroplastischen Reaktionsharzen und Glasfasern bezeichnen, hergestellt sein. Alternativ oder zusätzlich können auch Metalle oder unter Umständen auch reine Kunststoffe, an den Knotenpunkten vorgesehen sein. Einen überwiegenden bzw. maßgeblichen Werkstoffanteil des Zentralelements stellen jedoch Faserverbundwerkstoffe dar.

Unter dem Faserbund-Zentralelement ist insbesondere ein zentraler Bereich einer Fahrzeugkarosserie zu verstehen, welcher insbesondere im Bereich des Radstandes liegt und sich insbesondere über die Breite einer Fahrgastzelle erstreckt. Vorzugsweise handelt es sich um einen Bereich der Fahrzeugkarosserie, der sich im Crashfall, zumindest bei Standardlastfällen, nicht oder nicht maßgeblich verformt und somit zur Insassensicherheit beiträgt.

Diese Eigenschaften werden aus den bekannten werkstoffspezifischen Vorteilen von Faserverbundwerkstoffen, wie extremer Steifigkeit bei geringem Gewicht und vergleichsweise sehr hoher Lebensdauer ohne Korrosionsprobleme, gezogen, wobei die bisher vorherrschenden Nachteile dieser Werkstoffklasse hinsichtlich beispielsweise der eher schlechten Reparierbarkeit, problematischem Recycling und hohen Herstellungskosten durch die Widerverwendbarkeit einerseits und die modulare Auslegung mittels lösbarer Verbindung mit Crashstrukturen andererseits vermieden werden.

Vielmehr sind erfindungsgemäß Reparaturen nun auch von Unfallwägen möglich, deren Fahrzeugkarosserie Faserverbundwerkstoffe enthält. Durch die das Faserverbund-Zentralelement umgebenden Crashstrukturen ist die Aufnahme von Crashlasten außerhalb des Faserverbund-Zentralelements sicher gestellt. Da das Faserverbund-Zentralelement einem Vergleich sehr viel höhere Steifigkeit aufweist, werden Crashlasten darüber, sofern sie es überhaupt erreichen, lediglich weitergeleitet und darin nicht abgebaut.

Bisher beispielsweise für Faserverbund-Monocoque-Karosserien übliche Röntgenuntersuchungen sind somit trotz des Einsatzes von Faserverbundwerkstoffen bei der Reparatur nicht notwendig. Eine Reparatur einer Fahrzeugkarosserie im Crash Fall kann stattdessen in stark vereinfachter Weise lediglich durch Austausch der jeweils betroffenen Crashstruktur vorgenommen werden.

Erfindungsgemäß wird zur Reparatur die durch den Crashfall betroffene Crashstruktur, d. h. die Vorderwagen-Crashstruktur, die Hinterwagen-Crashstruktur und/oder eine Seitencrashstruktur an der jeweiligen Schnittstelle zum Faserbund-Zentralelement, d.h. der Frontschnittstelle, Heckschnittstelle und/oder Seitenschnittstelle, gelöst und von dem Faserverbund-Zentralelement abgenommen. Anschließend wird wieder eine neue Crashstruktur lösbar an der jeweiligen Schnittstelle angebracht.

Ferner wird die Faserverbundstruktur eines Faserverbund-Zentralelements erfindungsgemäß von der Crashstruktur reversibel entkoppelbar vorgesehen, was das schadensfreie Herauslösen aus der restlichen Fahrzeugkarosserie ermöglicht. Insbesondere kann neben einer Vorderwagen-Crashstrukturen eine hinter Wagen-Crashstruktur auch eine Seiten Crashstruktur reversibel in koppelbar vorgesehen sein, sodass die Verbindung mit sämtlichen Crashstrukturen wieder gelöst werden kann. Dies eröffnet völlig neue Möglichkeiten bei der Fahrzeugverwertung, denn das Faserverbundwerkstoff-Zentralelement kann auf einfache Weise durch die Demontage von der Verschrottung bewahrt und für eine neue Fahrzeugkarosserie wiederverwendet werden. Somit wird am Ende eines Fahrzeuglebenszyklus die Wiederverwendung des Faserverbund-Zentralelements, welches eine im Vergleich zu einem Fahrzeug sehr viel höhere Lebensdauer aufweist, und dessen Einsatz in einem weiteren Fahrzeuglebenszyklus ermöglicht. Auf diese Weise werden erfindungsgemäß die gegebenenfalls etwas höheren Herstellungskosten für das Faserverbund-Zentralelement überkompensiert und die Ökobilanz einer Faserverbundwerkstoff enthaltenden Fahrzeugkarosserie signifikant verbessert.

Eine besondere Synergie ergibt sich hierbei im Falle von in dem Faserverbund-Zentralelement aufgenommenen Energiespeichern, beispielsweise bei batterieelektrisch angetriebenen Fahrzeugen. Das Faserverbund-Zentralelement kann als Batteriegehäuse ausgebildet sein, sodass gemeinsam mit dem Faserverbund-Zentralelement die Batterien, welche typischerweise eine im Vergleich zu einem Fahrzeuglebenszyklus ebenfalls deutlich längere Lebensdauer aufweisen, direkt mit aus der Fahrzeugkarosserie entnommen werden können.

Die Batterien können anschließend entweder aus dem Zentralelement entnommen und für andere Zwecke, beispielsweise für Hausbatterien, eingesetzt werden. Alternativ könnten sie aber auch in dem Faserverbund-Zentralelement verbleiben und gemeinsam damit wiederverwendet werden, beispielsweise für eine neuartige kostengünstigere Fahrzeugklasse mit Sekundärbatterie oder für ein batterieelektrisches Fahrzeug mit einer geringeren Nennreichweite.

Die Erfindung schafft somit einen völlig neuen Ansatz, nämlich ein Karosseriestrukturmodul für ein Kraftfahrzeug auf mehrere Fahrzeuglebenszyklen auszulegen und wiederverwendbar zu gestalten. Bisherige Ansätze modularer Fahrzeugkarosserien waren stets auf einen einzigen Lebenszyklus eines Fahrzeugs ausgelegt, wobei gegebenenfalls lediglich der Austausch einzelner Komponenten innerhalb des Fahrzeug Lebenszyklus vorgesehen war. Die vorliegende Erfindung soll nun jedoch den Einsatz ein und desselben Faserverbund-Zentralelements mehreren Fahrzeuglebenszyklen ermöglichen, was durch die Faserverbundbauweise in Kombination mit den zur reversibel lösbaren Verbindung ausgelegten Schnittstellen ermöglicht ist.

Das reversible Lösen der Verbindung an den Schnittstellen kann beispielsweise durch Lösen eines lösbaren Klebers und/oder durch Lösen von lösbaren Schrauben, Nieten, Schließringbolzen oder anderen lösbaren Befestigungsmitteln, die an den Schnittstellen vorgesehen sein können, vorgenommen werden.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer nicht zur Erfindung gehörenden Ausführungsform sind bei dem Karosseriestrukturmodul ferner eine linke und eine rechte Seitenschnittstelle vorgesehen, welche jeweils zur schadensfreien lösbaren Verbindung des Faserverbund-Zentralelements mit einer Seitencrashstruktur ausgelegt sind. Auf diese Weise ist ferner auch eine reversibel lösbare Verbindung mit Seiten-Crashstrukturen ermöglicht. Das Faserverbund-Zentralelement kann auf diese Weise vollständig von einer Crashstrukturanordnung umgeben werden, sodass sämtliche Lastfälle durch die Crashstrukturanordnung aufgenommen werden können.

Gemäß einer nicht zur Erfindung gehörenden Ausführungsform weist das Faserverbund-Zentralelement Seitenwände auf, welche lediglich um eine einzige Achse gekrümmt sind, und welche die Seitenschnittstellen bilden. Durch die Krümmung lediglich um eine Achse sind die Seitenwände abwickelbar ausgebildet, was einerseits die Herstellung vereinfacht und andererseits zur definierten Lastabstützung ohne Scherkräfte bei Querbelastung beiträgt und dadurch die Festigkeit erhöht.

Gemäß einer nicht zur Erfindung gehörenden vorteilhaften Weiterbildung sind die linke und die rechte Seitenschnittstelle mit einem das Faserverbund-Zentralelement überspannenden oder überbrückenden lastabtragenden Querträger verbunden. Auf diese Weise sind Seitenaufpralllasten über das Faserverbund-Zentralelement hinweg übertragbar, sodass dieses im Seitenaufprall-Crashfall vorteilhaft schadensfrei und somit wiederverwendbar bleibt. Stattdessen kann die Crash-Energie gezielt in der dazu vorgesehenen Seitencrashstruktur abgebaut werden.

Gemäß einer nicht zur Erfindung gehörenden Ausführungsform weist das Faserverbund-Zentralelement einen Fahrzeugboden auf. Darunter ist ein Boden der Fahrgastzelle zu verstehen. Beispielsweise kann das Faserverbund-Zentralelement als umlaufender Rahmen mit einer zentralen Ausnehmung vorgesehen sein, in welche der Fahrzeugboden aufgenommen ist. Auf diese Weise lassen sich strukturelle Anbindungsstellen innerhalb der Fahrgastzelle direkt mit dem Faserverbund-Zentralelement verbinden.

Gemäß einer nicht zur Erfindung gehörenden vorteilhaften Weiterbildung ist das Faserverbund-Zentralelement, insbesondere über den Fahrzeugboden, als Sitzanbindung für einen Fahrzeugsitz ausgebildet. Vorteilhaft wird der Fahrzeugsitz somit an den steifsten Abschnitt einer Fahrzeugkarosserie angebunden.

Gemäß einer nicht zur Erfindung gehörenden Ausführungsform ist das Faserverbund-Zentralelement als Batteriegehäuse ausgebildet. Auf diese Weise wird eine darin aufgenommene Batterie maximal geschützt, denn das Faserverbund-Zentralelement bietet als steifster Abschnitt der Fahrzeugkarosserie einen maximalen Schutz für die Batterie im Crashfall. Ferner ergibt sich ein Synergieeffekt hinsichtlich der Wiederverwendung, denn das aus der restlichen Karosserie herauslösbare wiederverwendbare Faserverbund-Zentralelement kann gemeinsam mit den ebenfalls wiederverwendbaren Batterien entnommen und wiederverwendet werden.

Gemäß einer nicht zur Erfindung gehörenden vorteilhaften Ausführungsform sind in der Frontschnittstelle und/oder in der Heckschnittstelle Einsätze zur lösbaren Verankerung von Befestigungsmitteln für die lösbare Befestigung einer Vorderwagen-Crashstruktur und/oder einer Hinterwagen-Crashstruktur vorgesehen. Die Frontschnittstelle und/oder Heckschnittstelle ist insbesondere ebenfalls aus Faserverbundmaterial gebildet, vorzugsweise einteilig mit dem Faserverbund-Zentralelement. Über die vorzugsweise mit einlaminierten und korrespondierend zu den Befestigungsmitteln ausgebildeten Einsätze, sogenannte Inserts, ist somit eine vielfach reversible Verbindung, beispielsweise mit Schrauben und/oder Nieten und/oder Schließringbolzen, ermöglicht.

Gemäß einer nicht zur Erfindung gehörenden Ausführungsform einer modularen Fahrzeugkarosserie sind die linke und die rechte Seitenschnittstelle des Karosseriestrukturmoduls jeweils schadensfrei lösbar mit einer Seitencrashstruktur verbunden. Vorteilhaft ist das Faserverbund-Zentralelement somit auch im Falle eines Seitenaufprall-Crashfalls geschützt. Insbesondere sind die linke und die rechte Seitenschnittstelle zusätzlich mit einem das Faserverbund-Zentralelement überspannenden oder überbrückenden lastabtragenden Querträger verbunden, sodass Seitenaufprall-Lasten definiert in der Seitencrashstruktur aufgenommen werden können.

Gemäß einer nicht zur Erfindung gehörenden Ausführungsform der modularen Fahrzeugkarosserie ist das Faserverbund-Zentralelement im Bereich der Frontschnittstelle mit der Vorderwagen-Crashstruktur mit einem lösbaren Kleber verbunden. Alternativ oder zusätzlich können Sie mit lösbaren Schrauben, lösbaren Nieten, lösbaren Schließringbolzen oder dergleichen verbunden sein. Vorzugsweise sind dazu korrespondierende Einsätze bzw. Inserts an der Schnittstelle vorgesehen. Alternativ oder zusätzlich kann ferner das Faserverbund-Zentralelement im Bereich der Heckschnittstelle mit der Hinterwagen-Crashstruktur mit einem lösbaren Kleber verbunden sein. Selbstverständlich sind auch hier alternativ oder zusätzlich Verbindungen mit lösbaren Schrauben, lösbaren Nieten, lösbaren Schließringbolzen oder dergleichen möglich. In gleicher Weise kann auch das Faserverbund-Zentralelement im Bereich der Seitenschnittstellen mit der Seitencrashstruktur mit einem lösbaren Kleber verbunden sein. Die lösbare Klebeverbindung ist hier aufgrund des vergleichsweise geringeren Bauraums besonders vorteilhaft. Alternativ oder zusätzlich können auch hier Verbindungen mit lösbaren Schrauben, lösbaren Nieten, lösbaren Schließringbolzen oder dergleichen vorgesehen sein.

Gemäß einer nicht zur Erfindung gehörenden bevorzugten Ausführungsform sind das Faserverbund-Zentralelement, die Frontschnittstelle und die Heckschnittstelle mit hoher Steifigkeit ausgelegt und die Vorderwagen-Crashstruktur und die Hinterwagen-Crashstruktur zur Aufnahme sämtlicher Crashlasten im Front- oder Heck-Crashfall ausgelegt, so dass das Karosseriestrukturmodul dennoch beschädigungsfrei wiederverwendbar ist. Auf diese Weise wird sichergestellt, dass im Front- oder Heckcrashfall sämtliche Crashlasten durch die Vorderwagen- oder Hinterwagen-Crashstrukturen aufgenommen werden und das Karosseriestrukturmodul Lasten lediglich weiterleitet, jedoch nicht aufnimmt. Auf diese Weise bleibt das Karosseriestrukturmodul beschädigungsfrei und die Fahrzeugkarosserie kann entweder in erfindungsgemäßer Weise repariert oder Verwertet werden, wobei in beiden Fällen das Karosseriestrukturmodul weiter- bzw. wiederverwendet wird.

Gemäß einer nicht zur Erfindung gehörenden weiteren Ausführungsform weist das Karosseriestrukturmodul eine linke und eine rechte Seitenschnittstelle auf, welche jeweils zur schadensfreien lösbaren Verbindung des Faserverbund-Zentralelements mit einer Seitencrashstruktur ausgelegt sind und mit einem das Faserverbund-Zentralelement überspannenden oder überbrückenden lastabtragenden Querträger verbunden sind, wobei ferner die linke und rechte Seitenschnittstelle sowie der Querträger mit hoher Steifigkeit ausgelegt sind und die Seitencrashstruktur zur Aufnahme sämtlicher Crashlasten im Seitenaufprall-Crashfall ausgelegt sind, so dass das Karosseriestrukturmodul dennoch beschädigungsfrei wiederverwendbar ist. Auf diese Weise wird sichergestellt, dass im Seitenaufprall-Crashfall sämtliche Crashlasten durch die Seitencrashstrukturen aufgenommen werden und das Karosseriestrukturmodul bzw. der Querträger Lasten lediglich weiterleitet, jedoch nicht aufnimmt.

Die obigen Ausgestaltungen und Weiterbildungen lassen sich, sofern sinnvoll, beliebig miteinander kombinieren. Insbesondere sind sämtliche Merkmale eines Karosseriestrukturmoduls auf eine modulare Fahrzeugkarosserie übertragbar. Darüber hinaus sind sämtliche Merkmale einer modularen Fahrzeugkarosserie auf das Verfahren zur Reparatur oder auf das ht zur Erfindung gehörende Verfahren zur Verwertung derselben übertragbar, und sofern sinnvoll auch umgekehrt.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Seitenansicht eines Karosseriestrukturmoduls;
- Fig. 2: eine schematische Seitenansicht eines Abschnitts einer Fahrzeugkarosserie;
- Fig. 3: eine schematische Draufsicht auf eine Fahrzeugkarosserie gemäß einer weiteren nicht zur Erfindung gehörenden Ausführungsform;
- Fig. 4: eine perspektivische Ansicht von Komponenten einer Fahrzeugkarosserie gemäß einer weiteren nicht zur Erfindung gehörenden Ausführungsform;
- Fig. 5: eine perspektivische Ansicht eines Faserverbund-Zentralelements für ein Kraftfahrzeug gemäß einer weiteren nicht zur Erfindung gehörenden Ausführungsform;
- Fig. 6: eine Draufsicht auf eine Fahrzeugkarosserie gemäß einer weiteren nicht zur Erfindung gehörenden Ausführungsform vor einem Crashversuch;
- Fig. 7: eine Draufsicht auf die Fahrzeugkarosserie gemäß Fig. 6 nach dem Crashversuch; und
- Fig. 8: eine Seitenansicht der Fahrzeugkarosserie gemäß Fig. 7.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

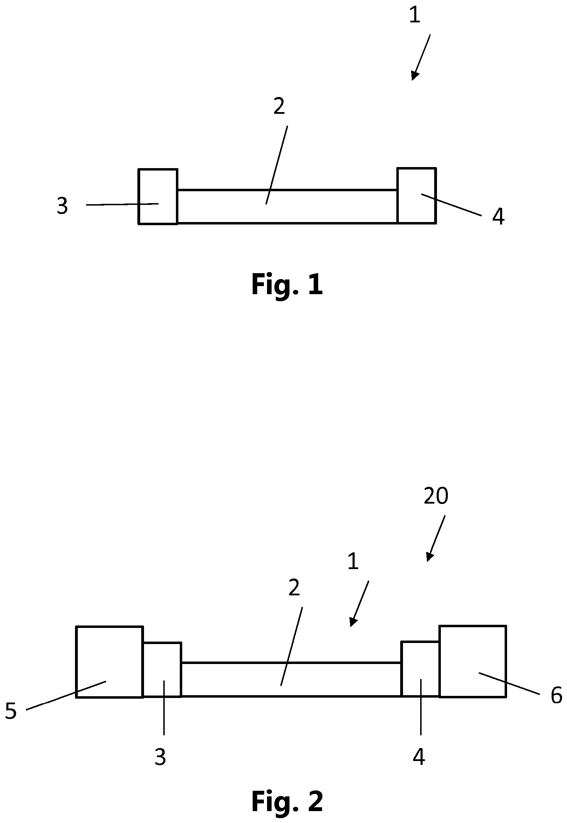

Fig. 1 zeigt eine schematische Seitenansicht eines Karosseriestrukturmoduls 1.

Das Karosseriestrukturmodul 1 ist hier lediglich schematisiert dargestellt und für ein Kraftfahrzeug als zentrales Modul einer Fahrzeugkarosserie vorgesehen.

Das Karosseriestrukturmodul 1 weist ein Faserverbund-Zentralelement 2 auf. Ferner sind daran eine Frontschnittstelle 3 und eine Heckschnittstelle 4 vorgesehen. Die Frontschnittstelle 3 ist zur schadensfreien lösbaren Verbindung des Faserverbund-Zentralelements 2 mit einer hier nicht dargestellten Vorderwagen-Crashstruktur 5 ausgebildet. Die Heckschnittstelle 4 ist zur schadensfreien lösbaren Verbindung des Faserverbund-Zentralelements 2 mit einer hier nicht dargestellten Hinterwagen-Crashstruktur 6 ausgebildet. Das Faserverbund-Zentralelement 2, die Frontschnittstelle 3 und die Heckschnittstelle 4 sind wiederverwendbar und auf eine Lebensdauer von mehreren Fahrzeuglebenszyklen ausgelegt.

Fig. 2 zeigt eine schematische Seitenansicht eines Abschnitts einer Fahrzeugkarosserie 20.

Die Fahrzeugkarosserie 20 ist modular aufgebaut und weist ein Karosseriestrukturmodul 1 gemäß Fig. 1 sowie eine Vorderwagen-Crashstruktur 5 und eine Hinterwagen-Crashstruktur 6 auf.

Die Vorderwagen-Crashstruktur 5 ist an der Frontschnittstelle 3 schadensfrei lösbar mit dem Faserverbund-Zentralelement 2 verbunden. Ferner ist die Hinterwagen-Crashstruktur 6 an der Heckschnittstelle 4 schadensfrei lösbar mit dem Faserverbund-Zentralelement 2 verbunden.

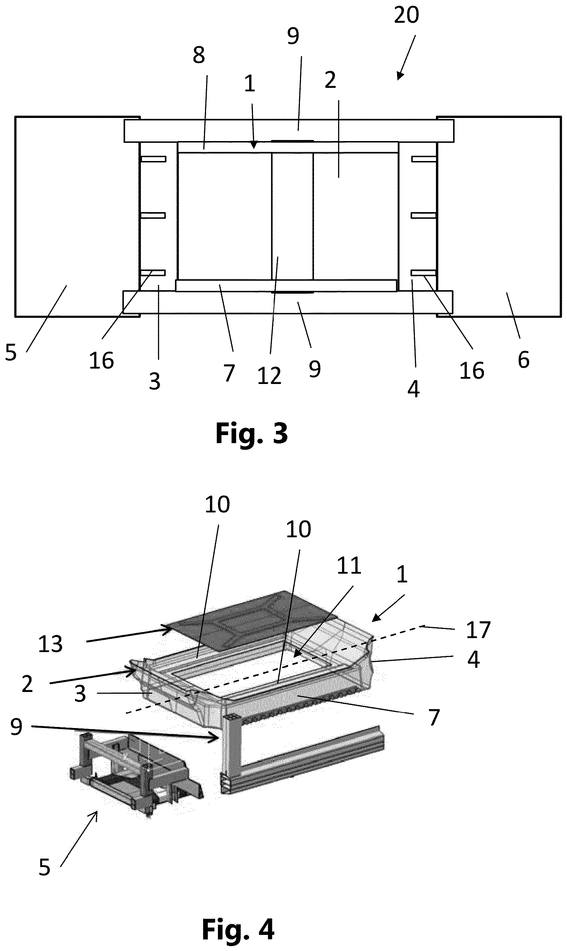

Fig. 3 zeigt eine schematische Draufsicht auf eine Fahrzeugkarosserie 20 gemäß einer weiteren nicht zur Erfindung gehörenden Ausführungsform.

Zusätzlich zu den in Bezug auf Fig. 1 und Fig. 2 beschriebenen Elementen weist die Fahrzeugkarosserie 20 hier Seitencrashstrukturen 9 auf, welche jeweils an einer linken Seitenschnittstelle 7 und einer rechten Seitenschnittstelle 8 schadensfrei lösbar mit dem Faserverbund-Zentralelement 2 verbunden sind.

Mittels der Vorderwagen-Crashstruktur 5, der Hinterwagen-Crashstruktur 6 und der Seitencrashstruktur 9 ist eine das Karosseriestrukturmodul 1 vollständig umgebende Crashstrukturanordnung geschaffen.

Innerhalb der Vorderwagen- und Hinterwagen-Crashstrukturen können, neben einer gezielt angeordneten Profilstruktur sowie Fachwerk- und Kasteneelementen, die beispielsweise aus profilförmigem Aluminium und/oder wahlweise auch aus Stahl herstellt sein können, auch sogenannte Crashelemente verbaut. Diese Crashelemente haben das Ziel, im Belastungsfall, insbesondere Aufprall bzw. Crash, eine möglichst hohe Verformung zu erfahren. Dabei wird die Crash-Energie absorbiert und so der Crash abgemildert.

Bei erhöhten Crashlasten wirken zusätzliche die Profile und Fachwerke in den Vorderwagen- und Hinterwagen-Crashstrukturen ebenfalls absorbierend und verhindern das Eindringen von Objekten und Bauteilen in das Faserverbund-zentrale Element 2, das heißt in die Fahrzeugkabine sowie ggfs. in eine Batteriestruktur im Falle eines Batterieelektrischen Fahrzeugs. Auf diese Weise wird die Insassensicherheit der modularen Fahrzeugstruktur 20 bereitgestellt.

Im Bereich der Seitenschnittstellen 7, 8, welche jeweils einen Schwellerbereich der Fahrzeugkarosserie 20 darstellen, wird eine energieabsorbierende Struktur der Seitencrashstruktur 9 beispielsweise aus Profilen gebildet, die im Schadensfall ebenso eine hohe Verformung erfahren und dabei Energie aufnehmen. Die Profile sind vorzugsweise aus Aluminiumstrangpressprofilen hergestellt, können aber alternativ auch aus anderen Materialien, beispielsweise einer Kombination mehrerer Stahlblechprofile, hergestellt sein.

Ziel der gesamten Crashstrukturanordnung 5, 6, 9 ist neben der Sicherung der Insassen eines Kraftfahrzeugs und ggfs. der Batterie auch die Schonung des Faserverbund-Zentralelements 2 sowie der Schnittstellen 3, 4, 7, 8. Auf dieser Weise wird trotz etwaiger Lastfälle für die Wiederverwendung des Karosseriestrukturmoduls 1 eine lange Lebensdauer sowie ein geringer Verschließ ermöglicht.

Die jeweilige lösbare Verbindung zwischen der Vorderwagen-Crashstruktur 5 und der Hinterwagen-Crashstruktur 6 mit dem Faserverbund-Zentralelement 2 ist vorwiegend über lösbare Verbindungselemente oder Befestigungsmittel, wie lösbare Kleber, Schrauben, ggf. aber auch Nieten, vorgesehen. Ebenso eignen sich beispielsweise Schließringbolzen.

Bei der dargestellten nicht zur Erfindung gehörenden Ausführungsform weisen die Frontschnittstelle 3 und die Heckschnittstelle 4 dazu jeweils schematisch dargestellte mit einlaminierte Einsätze 16, auch als Inserts bezeichnet, auf, die zum lösbaren verankern korrespondierender Befestigungsmittel zum schadensfreien lösbaren Verbinden des Faserverbund-Zentralelements 2 mit der Vorderwagen-Crashstruktur 5 und der Hinterwagen-Crashstruktur 6 vorgesehen sind.

Alternativ kann die Verbindung auch mit Hilfe einer reinen Klebverbindung realisiert werden. Diese Verbindungstechnik eignet sich aufgrund des geringeren Bauraums insbesondere zur Verbindung der Seitencrashstruktur 9 an den Seitenschnittstellen 7, 8 mit dem Faserverbund-Zentralelement 2.

Bei der dargestellten nicht zur Erfindung gehörenden Ausführungsform sind die linke und die rechte Seitenschnittstelle 7, 8 darüber hinaus mit einem das Faserverbund-Zentralelement 2 überbrückenden lastabtragenden Querträger 12 verbunden. Der Querträger 12 dient zur Übertragung von Seitenaufprall-Crashlasten über das Faserverbund-zentrale Element 2. Auf diese Weise werden derartige Lasten Seitenaufprall-Crashfall definiert in der Seitencrashstruktur 9 und nicht in dem Faserverbund-Zentralelement 2 aufgenommen.

Das Faserverbund-Zentralelement 2 ist als tragendes und massiv ausgelegtes Bauteil mit einer die übliche Lebensdauer von Fahrzeugkarosserien um ein Vielfaches übersteigenden Festigkeit ausgelegt. Sowohl das Faserverbund-Zentralelement 2 als auch die Frontschnittstelle 3 und die Heckschnittstelle 4 sind ferner wiederverwendbar auf eine solche Lebensdauer von mehreren Fahrzeugzyklen ausgelegt.

Auf diese Weise ist erfindungsgemäß ein besonderes Verfahren zur Reparatur einer Fahrzeugkarosserie ermöglicht. In einem ersten Schritt des Verfahrens wird eine Verbindung zwischen dem Faserverbund-Zentralelement und einer beschädigten Crashstruktur, d.h. beispielsweise der Vorderwagen-Crashstruktur 5 im Bereich einer Frontschnittstelle 3 und/oder der Hinterwagen-Crashstruktur 6 im Bereich einer Heckschnittstelle 4 und/oder der Seitencrashstruktur 9 im Bereich einer Seitenschnittstelle 7,8, gelöst. In einem zweiten Schritt wird die beschädigte Crashstruktur, d.h. die Vorderwagen-Crashstruktur 5 und/oder Hinterwagen-Crashstruktur 6 und/oder Seitencrashstruktur 9, von dem Faserverbund-Zentralelement 2 abgenommen. In einem dritten Schritt wird eine neue Crashstruktur, d.h. eine neue Vorderwagen-Crashstruktur 5 an der Frontschnittstelle 3 und/oder einer neue Hinterwagen-Crashstruktur 6 an der Heckschnittstelle 4 und/oder eine neue Seitencrashstruktur 9 an der Seitenschnittstelle 7, 8, angebracht und mit dem Faserverbund-Zentralelement 2 verbunden.

Somit ist zur Reparatur einer Fahrzeugkarosserie stets ein modularer Austausch von einzelnen Crashstrukturen ermöglicht, ohne dass das Faserverbund-Zentralelement 2 ausgetauscht werden muss.

Des Weiteren eröffnet die Fahrzeugkarosserie ein besonderes Verfahren zur Verwertung derselben. Dazu wird eine Verbindung zwischen dem Faserverbund-Zentralelement 2 und den Crashstrukturen 5, 6, 9, d. h. die Verbindung zwischen einem Faserverbund-Zentralelement 2 und der Vorderwagen-Crashstruktur 5 im Bereich einer Frontschnittstelle 3, die Verbindung zwischen dem Faserverbund-Zentralelement 2 und der Hinterwagen-Crashstruktur 6 im Bereich der Heckschnittstelle 4 und die Verbindung zwischen dem Faserverbund-Zentralelement 2 und der Seiten-Crashstruktur 9 jeweils im Bereich der linken und einer rechten Seitenschnittstelle 7, 8, schadenfrei bzw. zerstörung frei gelöst. Beispielsweise kann dies durch Lösen entsprechender Befestigungsmittel von in den Schnittstellen vorgesehenen Einsätzen und/oder durch Lösen lösbarer Verklebungen vorgenommen werden. Daraufhin wird das Faserverbund-Zentralelement 2 aus der Fahrzeugkarosserie 20 zur Wiederverwertung des Faserverbund-Zentralelements 2 für eine neue Fahrzeugkarosserie entnommen. Das Faserverbund-Zentralelement 2 kann somit beispielsweise von einem Fahrzeughersteller in die Produktion neuer Fahrzeugkarosserien eingeschleust werden.

Fig. 4 zeigt eine perspektivische Ansicht von Komponenten einer Fahrzeugkarosserie 20 gemäß einer weiteren nicht zur Erfindung gehörenden Ausführungsform.

Es handelt sich dabei um eine explosionszeichnungsartige Darstellung, wobei hier zur besseren Übersichtlichkeit neben dem Karosseriestrukturmodul 1 lediglich die Vorderwagen-Crashstruktur 5, eine Seitencrashstruktur 9 sowie ein Fahrzeugboden 13 dargestellt sind.

Das Faserverbund-Zentralelement 2 ist hier als rechteckiger Rahmen ausgebildet und weist ferner Seitenwände 10 auf, welche lediglich um eine einzige Achse, hier die lediglich schematisch eingezeichnete Fahrzeuglängsachse 17, gekrümmt sind. Die Seitenwände 10 bilden ferner mit ihrer Außenseite die Seitenschnittstellen 7, 8.

Der Fahrzeugboden 13 ist hier beispielhaft ebenfalls rechteckig ausgebildet und in das Faserverbund-Zentralelement 2 integrierbar vorgesehen, indem er in eine rechteckige Ausnehmung 11 des Faserverbund-Zentralelements 2 eingesetzt wird. Über den Boden 13 kann das Faserverbund-Zentralelement 2 als Sitzanbindung für einen Fahrzeugsitz ausgebildet sein.

Selbst verständlich sind die richtigen Formen hier rein beispielhaft zu verstehen und bei weiteren nicht zur Erfindung gehörenden Ausführungsformen andere Formen als rechteckige Formen des Rahmens, des Bodens 13 und der Ausnehmung 11 möglich. Beispielsweise wäre alternativ eine abschnittsweise abgerundete Form des Rahmens und seiner Ausnehmung 11 denkbar, wobei der Boden 13 korrespondierend dazu geformt wäre.

Das Karosseriestrukturmodul 1 besteht vorwiegend aus Faserverbundwerkstoffen wie Kohlenstoffaser-Kunststoff-Verbunden (CFK) oder Glasfaser-Kunststoff-Verbunden (GFK). Das Faserverbund-Zentralelement 2 kann dazu bei einer nicht zur Erfindung gehörenden Ausführungsform monolithisch in einem Pressverfahren, beispielsweise Resin Transfer Molding (RTM) oder Nasspressen (Wet Pressing), hergestellt sein. Alternativ wäre im Falle kleiner Stückzahlen auch eine Herstellung mittels Vakuuminfusion, ggfs. auch mit Handlaminat als Einzelbauteil, denkbar.

Darüber hinaus ist aber auch eine mehrteilige Profilbauweise mit Faserverbundprofilen möglich, in der Bauteile aus einem oder mehreren der oben genannten Verfahren kombiniert werden mit faserspezifischen Herstellungsverfahren wie Pultrusion oder Wickeln.

Darüber hinaus sind hybride Bauweisen denkbar, in welchen beispielsweise Ecken oder andere Knotenpunkte des Faserverbund-Zentralelements 2 aus anderen Werkstoffen wie anderen Faserverbunden, Metallen, insbesondere Aluminium oder Stahl, reinen Kunststoffen, Holz oder dergleichen gefertigt sein können.

An einer Unterseite des Faserverbund-Zentralelements 2 kann zusätzlich eine hier nicht dargestellte Wanne 18 angeordnet sein. Zwischen einer derartigen Wanne 18 und dem Fahrzeugboden 13 kann ein Zwischenraum vorgesehen werden, der beispielsweise zur Aufnahme eines Energiespeichers, insbesondere von Batterien, ausgebildet sein kann. Eine solche Wanne 18 stellt ein großes flächiges Bauteil dar. Beispielsweise kann die Wanne 18 im Tiefziehverfahren aus Aluminium- oder Stahlblechen sowie Kunststoffen oder Faserverbundwerstoffen hergestellt werden. Denkbar ist hier auch eine Sandwichstruktur aus einem der oben genannten Werkstoffe in Kombination mit einem Wabenkern oder Schaum.

Ein Kraftfahrzeug mit einer derartigen Fahrzeugkarosserie 20 kann beispielsweise typische Abmaße und das Gewicht eines PKW aufweisen. Insbesondere können die Abmaße einen Radstand von 2,5 m bis 3 m, beispielsweise etwa 2,7 m, eine Länge von 4 m bis 4,5 m, beispielsweise etwa 4,4 m, eine Breite von 1,5 m bis 2,2 m, beispielsweise etwa 1,8 m, und eine Höhe von 1,4 m bis 2 m, beispielsweise etwa 1,6 m, aufweisen. Ein Gewicht liegt typischerweise im Bereich von 1.0 t bis 2,5 t, insbesondere 1,1 t bis 2 t, vorzugsweise 1,1 t bis 1,6 t.

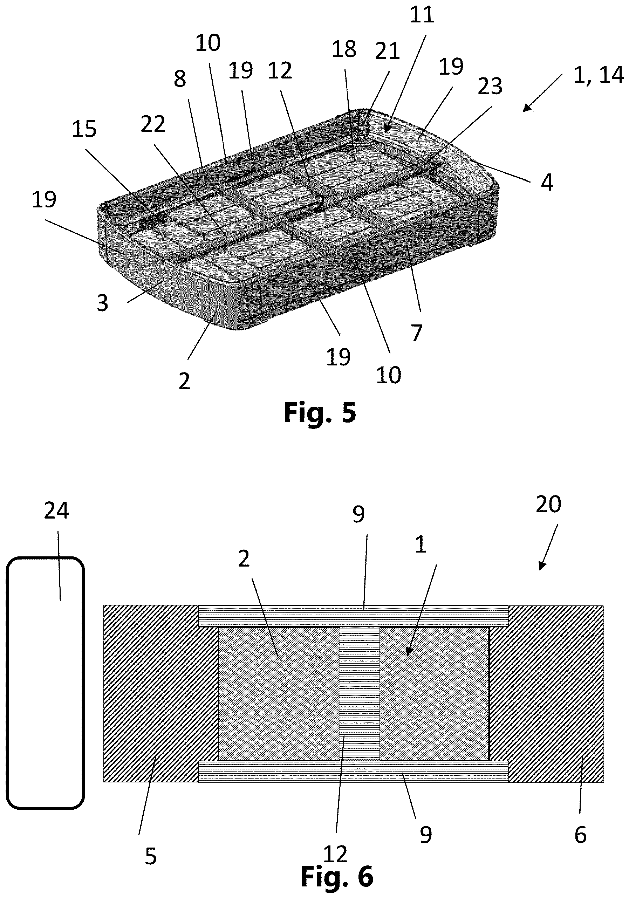

Fig. 5 zeigt eine perspektivische Ansicht eines Faserverbund-Zentralelements 2 für ein Kraftfahrzeug gemäß einer nicht zur Erfindung gehörenden Ausführungsform.

Das Faserverbund-Zentralelement 2 ist bei dieser nicht zur Erfindung gehörenden Ausführungsform als Batteriegehäuse 14 ausgebildet. Es weist dazu eine hier sichtbare Wanne 18 auf, in welcher eine Vielzahl von Batterien 15 angeordnet sind.

Ferner ist das Faserverbund-Zentralelement 2 hier aus pultrudierten Faserverbund-Profilen 19, beispielsweise aus Kohlenstofffaser-Kunststoff-Verbund, hergestellt. Die Profile sind mit Knoten 21 aus einem anderen Faserverbundmaterial, beispielsweise einem sogenannten Sheet Molding Compound oder Bulk Molding Compound, welche Pressmassen aus duroplastischen Reaktionsharzen und Glasfasern bezeichnen, verbunden. Die Verbindung der Profile und Knoten erfolgt Stoffschlüssig, vorzugsweise durch eine dauerhafte Klebverbindung.

Die Profile 19 sind an den Seitenwänden 10, die bei einer Fahrzeugkarosserie 20 im Schwellerbereich liegen, gerade ausgebildet.

Im Bereich der Frontschnittstelle 3 und der Heckschnittstelle 4 sind die Profile 19 bei dieser nicht zur Erfindung gehörenden Ausführungsform in einem konstanten Radius gebogen. Dementsprechend ergibt sich eine Ausnehmung 11 für den hier nicht dargestellten Fahrzeugboden 13 mit zwei geraden und zwei gerundeten Kanten.

Innerhalb des Faserverbund-Zentralelements 2 werden Aluminiumprofile zur Verstärkung eingesetzt. Die Wanne 18 ist beispielsweise ebenfalls aus CFK in Kombination mit einem Schaumkern als Sandwichstruktur ausgebildet. Die als Querträger 12 und auch als Längsträger 22 ausgebildeten Aluminiumprofile sind als Strangpressprofile zur Versteifung vorgesehen und an die Wanne 18 mit Anbindungselementen 23 angebunden, um eine gute Krafteinleitung zu gewährleisten.

Mit dieser nicht zur Erfindung gehörenden Ausführungsform können bei der Verwertung einer Fahrzeugkarosserie 20 die typischerweise eine im Vergleich zu einem Fahrzeuglebenszyklus ebenfalls deutlich längere Lebensdauer aufweisenden Batterien 15 gemeinsam mit dem Faserverbund-Zentralelement 2 aus der Fahrzeugkarosserie 20 entnommen werden und ebenfalls wiederverwendet werden.

Für die Herstellung der Knoten 21, Anbindungselemente 23 und die Sandwichstruktur der Wanne 18 können bei einer nicht zur Erfindung gehörenden Ausführungsform Recyclingfasern aus Sekundärquellen bis zu einem Anteil von 100% eingesetzt werden. Auf diese Weise wird die Ökobilanz der Fahrzeugkarosserie 20 zusätzlich verbessert.

Fig. 6 zeigt eine Draufsicht auf eine Fahrzeugkarosserie 20 gemäß einer nicht zur Erfindung gehörenden Ausführungsform vor einem Crashversuch.

Es handelt sich beispielhaft um einen Frontaufprall-Crashversuch, insbesondere einen Standardlastfall wie beispielsweise einen Aufprall der kompletten Fahrzeugfront auf ein massives, unverformbares Hindernis 24 mit 50 km/h. Vor dem Aufprall ist die Vorderwagen-Crashstruktur 5 unverformt.

Selbstverständlich können in gleicher Weise Crashversuche für andere Lastfälle, insbesondere andere Standardlastfälle wie ein Aufprall auf ein versetztes Hindernis, ein Seitenaufprall, ein Pfahlaufprall oder dergleichen auf die Fahrzeugstruktur 20 angewendet werden.

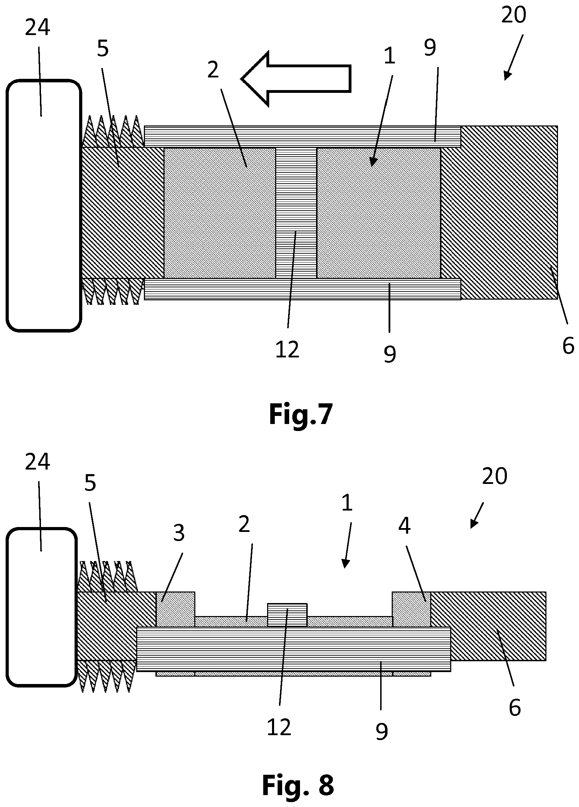

Fig. 7 zeigt eine Draufsicht auf die Fahrzeugkarosserie 20 gemäß Fig. 6 nach dem Crashversuch.

Der Aufprall wurde in der eingezeichneten Pfeilrichtung gegen das Hindernis 24 vorgenommen. Erkennbar ist die Vorderwagen-Crashstruktur 5 nun verformt um die Last des Aufpralls aufzunehmen.

Fig. 8 zeigt eine Seitenansicht der Fahrzeugkarosserie gemäß Fig. 7.
das Faserverbund-Zentralelement 2, die Frontschnittstelle 3 und die Heckschnittstelle 4 sind im Vergleich zu der Crashstruktur mit hoher Steifigkeit ausgelegt. Die Vorderwagen-Crashstruktur 5 und die Hinterwagen-Crashstruktur 6 sind hingegen zur Aufnahme sämtlicher Crashlasten im Front- oder Heck-Crashfall ausgelegt, so dass das Karosseriestrukturmodul 1 trotz des Aufpralls dennoch beschädigungsfrei bleibt. Auch nach einem derartigen Aufprall ist das Karosseriestrukturmodul 1 somit wiederverwendbar.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Insbesondere können die Schnittstellen, 3, 4, 7, 8 in anderer Weise zur reversibel lösbaren Verbindung mit Crashstrukturen ausgebildet sein. Denkbar wären beispielsweise auch stoffschlüssige Verbindungen über bewusst beim Lösen der Verbindung ohne Beschädigung der Schnittstellen zerstörbaren stoffschlüssig verbundenen Verbindungselementen, oder dergleichen.

### Bezugszeichenliste

- 1: Karosseriestrukturmodul
- 2: Faserverbund-Zentralelement
- 3: Frontschnittstelle
- 4: Hecksschnittstelle
- 5: Vorderwagen-Crashstruktur
- 6: Hinterwagen-Crashstruktur
- 7: linke Seitenschnittstelle
- 8: rechte Seitenschnittstelle
- 9: Seitencrashstruktur
- 10: Seitenwände
- 11: Ausnehmung
- 12: Querträger
- 13: Fahrzeugboden
- 14: Batteriegehäuse
- 15: Batterien
- 16: Einsatz
- 17: Fahrzeuglängsachse
- 18: Wanne
- 19: Profil
- 20: Fahrzeugkarosserie
- 21: Knoten
- 22: Längsträger
- 23: Anbindungselement
- 24: Hindernis

## Patentansprüche

1. Verfahren zur Reparatur einer Fahrzeugkarosserie mit den Schritten:
Schadensfreies Lösen einer Verbindung zwischen einem als Batteriegehäuse (14) ausgebildeten Faserverbund-Zentralelement (2) und einer Vorderwagen-Crashstruktur (5) im Bereich einer Frontschnittstelle (3) und/oder einer Hinterwagen-Crashstruktur (6) im Bereich einer Heckschnittstelle (4) und/oder einer Seitencrashstruktur (9) im Bereich einer Seitenschnittstelle (7; 8);
Abnehmen der Vorderwagen-Crashstruktur (5) und/oder Hinterwagen-Crashstruktur (6) und/oder Seitencrashstruktur (9) von dem Faserverbund-Zentralelement (2); und
Anbringen und lösbares Verbinden mit dem Faserverbund-Zentralelement (2) einer neuen Vorderwagen-Crashstruktur (5) an der Frontschnittstelle (3) und/oder einer neuen Hinterwagen-Crashstruktur (6) an der Heckschnittstelle (4) und/oder einer neuen Seitencrashstruktur (9) an der Seitenschnittstelle (7; 8).

## Claims

1. Method for repairing a vehicle body having the steps:
the release in a damage free manner of a connection between a fibre composite central element (2), which is embodied as a battery housing (14), and a front of vehicle crash structure (5) in the region of a front interface (3) and/or of a connection between said fibre composite central element and a rear of vehicle crash structure (6) in the region of a rear end interface (4) and/or of a connection between said fibre composite central element and a side crash structure (9) in the region of a side interface (7; 8) ;
the removal of the front of vehicle crash structure (5) and/or of the rear of vehicle crash structure (6) and/or of the side crash structure (9) from the fibre composite central element (2); and
the attachment and releasable connection to the fibre composite central element (2) of a new front of vehicle crash structure (5) at the front interface (3) and/or of a new rear of vehicle crash structure (6) at the rear end interface (4) and/or of a new side crash structure (9) at the side interface (7; 8).

## Revendications

1. Procédé de réparation d'une carrosserie de véhicule, comportant les étapes consistant à :
libérer sans dommage une liaison entre un élément central composite renforcé par des fibres (2) réalisé sous la forme d'un boîtier de batterie (14) et une structure d'absorption de chocs d'avant-train (5) dans la zone d'une interface avant (3) et/ou une structure d'absorption de chocs d'arrière-train (6) dans la zone d'une interface arrière (4) et/ou une structure d'absorption de chocs latérale (9) dans la zone d'une interface latérale (7 ; 8) ;
retirer la structure d'absorption de chocs d'avant-train (5) et/ou structure d'absorption de chocs d'arrière-train (6) et/ou structure d'absorption de chocs latérale (9) de l'élément central composite renforcé par des fibres (2) ; et
monter sur et relier de manière libérable à l'élément central composite renforcé par des fibres (2) une nouvelle structure d'absorption de chocs d'avant-train (5) sur l'interface avant (3) et/ou une nouvelle structure d'absorption de chocs d'arrière-train (6) sur l'interface arrière (4) et/ou une nouvelle structure d'absorption de chocs latérale (9) sur l'interface latérale (7 ; 8).
